# EUROPEAN PATENT SPECIFICATION

(11) **EP 3 926 795 B1**
(45) Date of publication and mention of the grant of the patent: **05.07.2023**
(21) Application number: 19933700.7
(22) Date of filing: 24.12.2019
(51) Int. Cl.: H02K 19/14, H02K 1/24

(54) **DIRECT START-UP AND SYNCHRONOUS RELUCTANCE MOTOR ROTOR STRUCTURE AND MOTOR COMPRISING SAME**
ROTORSTRUKTUR FÜR DIREKTANLAUF UND SYNCHRONRELUKTANZMOTOR UND MOTOR DAMIT
STRUCTURE DE ROTOR DE MOTEUR À RÉLUCTANCE SYNCHRONE ET À DÉMARRAGE DIRECT ET MOTEUR LE COMPRENANT

(30) Priority: 19.06.2019 CN 201910533721
(43) Date of publication of application: 22.12.2021
(73) Proprietor: Gree Electric Appliances, Inc. of Zhuhai, Zhuhai, Guangdong 519070 (CN)
(72) Inventor: SHI, Jinfei, Zhuhai, Guangdong 519070 (CN); HU, Yusheng, Zhuhai, Guangdong 519070 (CN); CHEN, Bin, Zhuhai, Guangdong 519070 (CN); XIAO, Yong, Zhuhai, Guangdong 519070 (CN); LI, Xia, Zhuhai, Guangdong 519070 (CN); YU, Qinhong, Zhuhai, Guangdong 519070 (CN)
(74) Representative: Noble, Nicholas
(86) International application number: PCT/CN2019/128072
(87) International publication number: WO 2020/253194

(56) References cited:
- WO-A1-2018/083639
- CN-A- 105 703 502
- CN-A- 108 110 920
- CN-A- 109 378 913
- CN-A- 109 378 913
- CN-A- 109 494 903
- CN-A- 109 494 903
- CN-A- 110 112 847
- DE-A1- 1 638 449

## Description

### TECHNICAL FIELD

The present application relates to the field of motor device technology, and particularly to a rotor structure for direct-start synchronous reluctance motor and a motor having the same. The application claims priority to Chinese Patent Application No. 201910533721.1, entitled "Rotor Structure for Direct Start-Up Synchronous Reluctance Motor and Motor Comprising Same", filed on June 19, 2019.

### BACKGROUND

The direct-start synchronous reluctance motor combines the structural characteristics of an induction motor and a synchronous reluctance motor, and implements the start through the torque generated by the squirrel cage induction, and implements the constant speed operation by a reluctance torque generated by an inductance difference of the rotor, and thus can be directly connected to the power supply to implement the start-up operation. Compared with the direct-start permanent magnet motor, the direct-start synchronous reluctance motor has no rare earth permanent magnet materials and no demagnetization problem. Accordingly, the motor has low cost and good reliability, and has high efficiency and constant speed compared to the asynchronous motor.

The conventional synchronous reluctance motor requires an actuator to start and control the operation, which is costly and difficult to control, and the actuator produces a part of the loss, which decreases the efficiency of the entire motor system. In the prior art, the patent with the publication number CN106537740A provides a rotor, a reluctance machine, and a manufacturing method for the rotor; the filling material of the rotor flux cut-off portion reaches the periphery of the rotor and forms a part of the periphery of the rotor; after filling with the material, the flux cut-off portion needs cutting. However, the manufacturing time is long, the efficiency is low, the manufacturing cost is high, and the motor torque pulsation is large, and the vibration and noise are large.

The document WO 2018/083639A1 discloses that a rotor of a synchronous reluctance motor is defined by a plurality of superimposed laminations, each of which has two series of openings distributed within two mutually concentric circular crowns; one series of the openings having for each magnetic pole of the synchronous reluctance motor a respective central opening arranged between at least two side openings, each of which opens outwards at an outer surface of the respective lamination.

### SUMMARY

The main purpose of this application is to provide a rotor structure for a direct-start synchronous reluctance motor and a motor having the same to solve the problem of large torque pulsation of the motor in the prior art.

In order to achieve the above purpose, in one aspect of the present application, a rotor structure for a direct-start synchronous reluctance motor is provided, including: a rotor core, the rotor core is provided with a plurality of slit slots, and both ends of each slit slot are respectively provided with filling slots, an end portion of a filling slot adjacent to an edge of the rotor core has a first position adjacent to a *d*-axis of the rotor core and a second position away from the *d*-axis, and each filling slot is provided with a notch at the first position or the second position; in a same pole of the rotor core, when one of two adjacent filling slots is provided with a notch at the first position, the other filling slot is provided with a notch at the second position; outer peripheral ends of the filling slots at both ends of the slit slot are partially opened, so that the notch is provided to form a half-open slot structure; and the filling slots are filed with a conductive non-magnetic material.

Furthermore, one of two filling slots on both sides of the d-axis and adjacent to the d-axis is provided with a notch at the first position, and the other filling slot is provided with a notch at the second position; or, one of the two filling slots is provided with a notch at the first position, and the other filling slot is provided with a notch at the first position; or, one of the two filling slots is provided with a notch at the second position, and the other filling slot is provided with a notch at the second position.

Furthermore, a width of notch is equal to k, with 0.5σ≤*k*≤4σ, and σ is a width of an air gap between a stator core and the rotor cores.

Furthermore, 0.1*W*≤*k*≤0.7*W*, and *W* represents a width of the end portion of the filling slot adjacent to the edge of the rotor core.

Furthermore, a side wall of the end portion of the filling slot adjacent to the edge of the rotor core is provided with a beveled edge structure, and an angle between the beveled edge structure and a geometric centerline of the notch in a radial direction of the rotor core is θ, with 120°≤θ≤160°.

Furthermore, a reinforcing rib is provided between the filling slot and an adjacent slit slot, a width of the reinforcing rib is equal to *L1*, with 0.8σ≤*L1*≤3σ, and σ is a width of an air gap between the stator core and the rotor core.

Furthermore, an independent filling slot is provided in a q-axis direction of the rotor core, the independent filling slot is provided adjacent to an outer edge of the rotor core, the independent filling slot has an arc structure, and a side of the independent filling slot facing a shaft hole of the rotor core is arranged to protrude.

Furthermore, the filling slot and the independent filling slot are filled with a conductive and non-magnetic material, such that the conductive and non-magnetic material is short-circuited with conductive end rings located at both ends of the rotor core to form a squirrel cage.

Furthermore, the conductive and non-magnetic material is aluminum or an aluminum alloy.

In another aspect of the present application, a motor is provided, which includes the above-mentioned rotor structure for the direct-start synchronous reluctance motor.

By applying the technical solution of the present application, in the same pole of the rotor core, when one of two adjacent filling slots is provided with a notch at the first position, the other filling slot is provided with a notch at the second position. Such arrangement can further block the *q*-axis magnetic flux without affecting the *d*-axis magnetic flux entering the stator, thereby increasing the difference between the *d*-axis and *q*-axis magnetic fluxes, generating a greater reluctance torque, increasing the motor output and efficiency, and meanwhile increasing the overload capacity of the motor. In the same pole, the two adjacent notches are designed to be asymmetrical, so that the torque pulsations generated by the rotor structure and the stator tooth socket weaken each other, to reduce the torque pulsation of the motor and reduce the noise of vibration of the motor.

### BRIEF DESCRIPTION OF THE DRAWINGS

The accompanying drawings of the specification forming a part of the application are utilized to provide further understanding of the present application, and the exemplary embodiments and descriptions of the present application are utilized to explain the application, and do not constitute an improper limitation to the present application. In the accompanying drawings:
FIG. 1 is a schematic structure diagram of a rotor structure for a direct-start synchronous reluctance motor according to an embodiment I of the present application.
FIG. 2 is a schematic diagram of an enlarged structure of the portion Ain FIG. 1.
FIG. 3 is a comparison diagram of a *q*-axis inductance of a motor of the present application and a *q*-axis inductance of a motor of the prior art.
FIG. 4 is a comparison diagram showing a torque curve of a motor of the present application and a torque curve of a motor of the prior art.

The above drawings include the following reference signs:
10, rotor core;
20, slit slot;
30, filling slot; 31, notch;

### DETAILED DESCRIPTION

It should be noted that the embodiments in the present application and the features in the embodiments can be combined with each other if there is no conflict. Hereinafter, the present application will be described in detail with reference to the accompanying drawings and in conjunction with the embodiments.

It should be noted that the terms used here are merely for describing specific embodiments, and are not intended to limit the exemplary embodiments according to the present application. As used herein, unless the context clearly indicates otherwise, the singular form is also intended to include the plural form. In addition, it should also be understood that when the terms "comprising" and/or "including" are used in this specification, they indicate that there exist features, steps, operations, devices, components, and/or combinations thereof.

It should be noted that the terms "first" and "second", etc., in the description, claims and drawings of the present application are utilized to distinguish similar objects, and are not definitely utilized to describe a specific sequence or order. It should be understood that the terms used in this way can be interchanged under appropriate circumstances, so that the embodiments of the present invention described herein can be implemented in an order other than those illustrated or described herein. In addition, the terms "including" and "having" and any transformations thereof are intended to cover non-exclusive inclusions. For example, a process, a method, a system, a product, or a device that includes a series of steps or units is not definitely limited to those clearly listed steps or units, but may include other steps or units that are not clearly listed or are inherent to these processes, methods, products, or devices.

For ease of description, spatial relative terms can be used here, such as "above", "over", "on an upper surface", "on", etc., to describe a spatial position relationship between one device or feature and other devices or features as shown in the figures. It should be understood that the spatial relative terms are intended to include different orientations in use or operation other than the orientation of the device described in the figures. For example, if the device in the figures is inverted, then the device described as "above the other device or structure" or "over the other device or structure" will then be positioned as "below the other device or structure" or "under other devices or structures". Thus, the exemplary term "above" can include both orientations "above" and "below". The device can also be positioned in other different manners (such as being rotated by 90 degrees or in other orientations), and the relative description of the space used here will be explained accordingly.

Now, exemplary embodiments of the present invention will be described in more detail with reference to the accompanying drawings. However, these exemplary embodiments can be implemented in a variety of different forms, and should not be construed as being limited to the embodiments set forth herein. It should be understood that these embodiments are provided to make the disclosure of this application thorough and complete, and to fully convey the concept of these exemplary embodiments to those of ordinary skill in the art. In the drawings, for clarity, the thicknesses of the layers and regions may be increased, and the same reference numerals are utilized to denote the same devices, so their descriptions will be omitted.

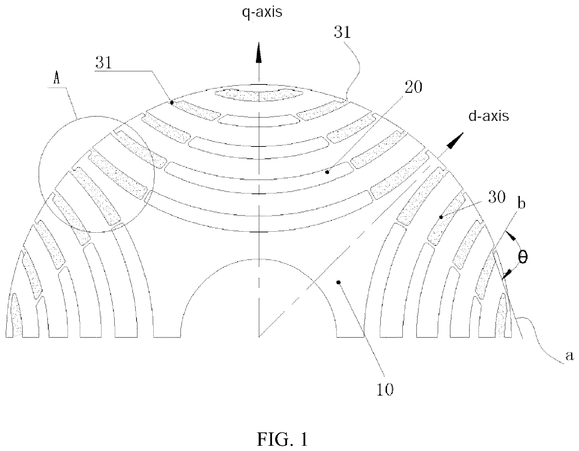

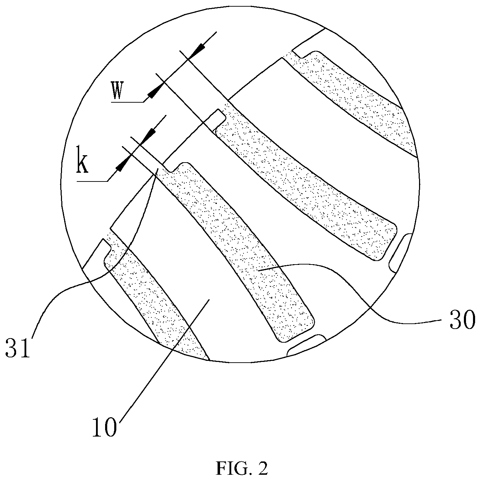

As shown in FIGS. 1 to 4, according to an embodiment of the present invention, a rotor structure for a direct-start synchronous reluctance motor is provided.

Specifically, as shown in FIG. 1, the rotor structure includes a rotor core 10. The rotor core 10 is provided with a plurality of slit slots 20; and two ends of each slit slot 20 are respectively provided with filling slots 30. An end portion of the filling slot 30 adjacent to the edge of the rotor core 10 has a first position adjacent to the *d*-axis of the rotor core 10 and a second position away from the *d*-axis; and each filling slot 30 is provided with a notch 31 at the first position or the second position. In the same pole of the rotor core 10, when one of two adjacent filling slots 30 is provided with a notch 31 at the first position, the other filling slot 30 is provided with a notch 31 at the second position.

In this embodiment, in the same pole of the rotor core 10, when one of two adjacent filling slots 30 is provided with a notch 31 at the first position, the other filling slot 30 is provided with a notch 31 at the second position. Such arrangement can further block the *q*-axis magnetic flux without affecting the *d*-axis magnetic flux entering the stator, thereby increasing the difference between the *d*-axis and *q*-axis magnetic fluxes, generating a greater reluctance torque, increasing the motor output and efficiency, and meanwhile increasing the overload capacity of the motor. In the same pole, the two adjacent notches 31 are designed to be asymmetrical, so that the torque pulsations generated by the rotor structure and the stator tooth socket weaken each other, to reduce the torque pulsation of the motor and reduce the noise of vibration of the motor.

One of the two filling slots 30 on both sides of the *d*-axis and adjacent to the *d*-axis is provided with a notch 31 at the first position, and the other filling slot 30 is provided with a notch 31 at the second position. Alternatively, one of the two filling slots 30 is provided with a notch 31 at the first position, and the other filling slot 30 is provided with a notch 31 at the first position; or one of the two filling slots 30 is provided with a notch 31 at the second position, and the other filling slot 30 is provided with a notch 31 at the second position. Such arrangement can also reduce the torque pulsation of the motor, and improve the practicability of the motor.

In order to further improve the performance of the motor, the width of the slot 31 is equal to *k*, where 0.5σ≤*k*≤4σ, and σ represents a width of an air gap between the stator core and the rotor core 10. 0.1 *W*≤*k*≤0*.*7*W*, where *W* represents a width of an end portion of the filling slot 30 adjacent to the edge of the rotor core 10.

In this embodiment, as shown in FIG. 1, a side wall of the end portion of the filling slot 30 adjacent to the edge of the rotor core 10 is provided with a beveled edge structure. An angle between the beveled edge structure and a geometric centerline of the notch 31 in the radial direction is θ, where 120°≤θ≤160°. The beveled edge structures can be provided only at end portions of some filling slots, or the beveled edge structures may be provided at end portions of all the filling slots. In FIG. 1, "*a*" represents an extension line of the beveled edge structure, and "*b*" represents the geometric centerline of the notch. Such arrangement can effectively prevent sudden changes in the magnetic field entering the stator, and effectively reduce the torque pulsation and noise of the motor.

Further, a reinforcing rib is provided between the filling slot 30 and an adjacent slit slot 20; a width of the reinforcing rib is equal to *L1*, with 0.8σ≤*L1*≤3σ, and σ is the width of the air gap between the stator core and the rotor core 10. Such arrangement can effectively improve the strength and stability of the rotor structure.

An independent filling slot is provided in the *q*-axis direction of the rotor core 10; and the independent filling slot is provided adjacent to the outer edge of the rotor core 10. The independent filling slot has an arc structure; and a side of the independent filling slot facing a shaft hole of the rotor core 10 is arranged to protrude Such arrangement can further reduce the torque pulsation of the motor and meanwhile increase the reluctance torque of the motor.

The filling slot 30 and the independent filling slot are filled with conductive and non-magnetic material, so that the conductive and non-magnetic material is short-circuited with conductive end rings located at both ends of the rotor core 10 to form a squirrel cage. The conductive and non-magnetic material is aluminum or an aluminum alloy.

The rotor structure in the above embodiment can also be applied in the field of motor device technology, that is, according to another aspect of the present application, a motor is provided. The motor includes the above-mentioned rotor structure for the direct-start synchronous reluctance motor.

Specifically, through the reluctance torque generated by the difference between the *d*-axis and *q*-axis inductances, the rotor structure for the direct-start synchronous reluctance motor provided by the present application implements the high efficiency and constant speed operation, solves the problem of low efficiency of asynchronous motors, and meanwhile reduces the torque pulsation of the motor and reduces the vibration and noise of the motor.

The rotor structure of the motor consists of a rotor core formed by laminating rotor punching sheets with a specific structure and conductive end rings at both ends of the rotor core. The rotor punching sheet is provided with a plurality of slit slots and filling slots, and a shaft hole matched with the rotating shaft and filling slots. The outer peripheral ends of the filling slots at both ends of the slit slot are partially opened, that is, a notch is provided, to form a half-open slot structure; and positions of notches of adjacent filling slots in the same pole are opposite, that is, a notch of a filling slot is provided on a side of an end portion of the filling slot adjacent to the *d*-axis, and a notch of an adjacent filling slot is provided on a side of an end portion of the filling slot far away from the *d*-axis.

The filling slots at both ends of the same slit slot are arranged symmetrically with respect to the *q*-axis; and the filling slots at both ends of the same slit slot have the same structure. Two notches of two filling slots on both sides of the center of the *d*-axis can be arranged simultaneously adjacent to the d-axis side or away from the *d*-axis; or one notch is arranged away from the *d*-axis, while the other is arranged adjacent to the *d*-axis. By providing the notch of the filling slot, the flow of the *q*-axis magnetic flux can be effectively blocked, the *q*-axis inductance can be reduced, the difference between the *d-*axis and *q*-axis inductances of the motor can be increased, and the output torque and efficiency can be improved. At the same time, the positions of the notches of the filling slots are different, so that the torques generated by the actions of the notches and the stator teeth can cancel each other, accordingly the torque pulsation of the motor can be reduced.

Further, the width of the notch of the filling slot is equal to *k, k* satisfies 0.5σ≤*k*≤4σ, and σ is the width of the air gap between the stator core and the rotor core. More preferably, the width *k* of the notch of the filling slot satisfies 1.5σ≤*k*≤3σ. The width of the end portion of the filling slot adjacent to the outer periphery of the rotor is equal to *w*, and the width of the botch is equal to *k* which is less than *w*. More preferably, 0.1W≤*k*≤0.7W. An appropriate width of the notch is selected to obtain an optimal inductance gap.

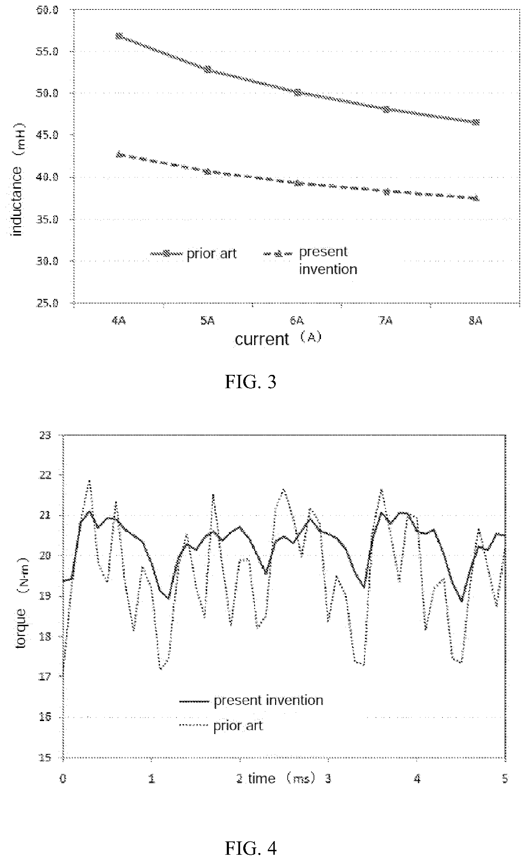

FIG. 3 shows a comparison between a *q*-axis inductance of a motor in the technical solution of the present application and a *q*-axis inductance of a motor in the prior art. The *q*-axis inductance of the motor in the technical solution of the present application is significantly reduced, the effect is obvious, and accordingly the difference between the *d*-axis and *q*-axis inductances can be increased.

The outer end of the filling slot is provided with a beveled edge structure, and the angle between the beveled edge and a notch edge is θ. Preferably, 120°≤θ≤160°. The beveled edge can increase the width of the magnetic passage between the filling slots at the outer periphery of the rotor, and can reduce the influence of the opening of the filling slot on the *d*-axis inductance, such that the *d*-axis can smoothly enter the stator to generate the torque.

FIG. 4 is a comparison diagram of a torque curve of a motor in the technical solution of the present application and a torque curve of a motor in the prior art. The torque pulsation of the motor in the present application is reduced by more than half, and the average torque is increased, which can reduce the vibration and noise generated by the torque pulsation, and meanwhile the torque of the motor is increased and the efficiency of the motor is improved. The width of the rib between the filling slot and the slit slot is equal to *L1*, *L1* satisfies 0.8σ≤*L1*≤3σ, and σ is the width of the air gap between the stator core and the rotor core. Such arrangement ensures sufficient mechanical strength while reducing the flow of the *q*-axis magnetic flux.

The filling slot and the slit slot are arranged in pairs on the circumference of the rotor; and there are at least two magnetic barrier layers in the radial direction of the rotor core, in which the magnetic barrier layer is formed by the filling slot and the slit slot, accordingly a pair of salient poles is formed. All filling slots are filled with the conductive and non-magnetic material. Preferably, the conductive and non-magnetic material is aluminum or an aluminum alloy. All the filling slots are short-circuited with the conductive end rings at both ends of the rotor to form a squirrel cage; and a material of the conductive end ring is the same as the material which fills the filling slots. The shapes of the slit slot and the filling slot is not limited to straight edges, or the arc shape, which does not affect the technical effect of the technical solution.

In addition to the above, it should be noted that the "one embodiment", "another embodiment", "embodiment", etc., referred to in this specification indicate that the specific features, structures, or characteristics described in conjunction with the embodiments are included in at least one embodiment described generally in this application. The same expression in multiple places in the specification does not definitely refer to the same embodiment. Furthermore, when a specific feature, structure, or characteristic is described in conjunction with any embodiment, it is claimed that the combination of other embodiments to realize such a feature, structure, or characteristic also falls within the scope of the present application.

In the above-mentioned embodiments, the description of each embodiment has its own emphasis. For parts that are not described in detail in an embodiment, reference may be made to related descriptions in other embodiments.

The foregoing descriptions are merely preferred embodiments of the invention, and are not intended to limit the application. For those skilled in the art, the application can have various modifications and transformations. Any modification, equivalent replacement, improvement, etc., made within the scope of the appended claims shall be included in the protection scope of the present application

## Claims

1. A rotor structure for a direct-start synchronous reluctance motor, comprising:
a rotor core (10), wherein the rotor core (10) is provided with a plurality of slit slots (20), and both ends of each slit slot (20) are respectively provided with filling slots (30), an end portion of a filling slot (30) adjacent to an edge of the rotor core (10) has a first position adjacent to a *d-*axis of the rotor core (10) and a second position away from the *d-*axis, and each filling slot (30) is provided with a notch (31) at the first position or the second position;
wherein, in a same pole of the rotor core (10), when one of two adjacent filling slots (30) is provided with a notch (31) at the first position, the other filling slot (30) is provided with a notch (31) at the second position;
wherein outer peripheral ends of the filling slots (30) at both ends of the slit slot (20) are partially opened, so that the notch (31) is provided to form a half-open slot structure; and the filling slots are filed with a conductive non-magnetic material.

2. The rotor structure for the direct-start synchronous reluctance motor according to claim 1, wherein one of two filling slots (30) on both sides of the *d*-axis and adjacent to the *d*-axis is provided with a notch (31) at the first position, and the other filling slot (30) is provided with a notch (31) at the second position; or, one of the two filling slots (30) is provided with a notch (31) at the first position, and the other filling slot (30) is provided with a notch (31) at the first position; or, one of the two filling slots (30) is provided with a notch (31) at the second position, and the other filling slot (30) is provided with a notch (31) at the second position.

3. The rotor structure for the direct-start synchronous reluctance motor according to claim 1 or 2, wherein a width of notch (31) is equal to *k*, with 0.5σ≤*k*≤4σ, and σ is a width of an air gap between a stator core and the rotor cores (10).

4. The rotor structure for the direct-start synchronous reluctance motor according to claim 3, wherein, 0.1*W*≤*k*≤0*.*7*W,* and *W* represents a width of the end portion of the filling slot (30) adjacent to the edge of the rotor core (10).

5. The rotor structure for the direct-start synchronous reluctance motor according to claim 1, wherein a side wall of the end portion of the filling slot (30) adjacent to the edge of the rotor core (10) is provided with a beveled edge structure, and an angle between the beveled edge structure and a geometric centerline of the notch (31) in a radial direction of the rotor core (10) is θ, with 120°≤θ≤160°.

6. The rotor structure for the direct-start synchronous reluctance motor according to claim 1, wherein a reinforcing rib is provided between the filling slot (30) and an adjacent slit slot (20), a width of the reinforcing rib is equal to *L1*, with 0.8σ≤*L1*≤3σ, and σ is a width of an air gap between the stator core and the rotor core (10).

7. The rotor structure for the direct-start synchronous reluctance motor according to claim 1, wherein an independent filling slot is provided in a q-axis direction of the rotor core (10), the independent filling slot is provided adjacent to an outer edge of the rotor core (10), the independent filling slot has an arc structure, and a side of the independent filling slot facing a shaft hole of the rotor core (10) is arranged to protrude

8. The rotor structure for the direct-start synchronous reluctance motor according to claim 7, wherein the filling slot (30) and the independent filling slot are filled with a conductive and non-magnetic material, such that the conductive and non-magnetic material is short-circuited with conductive end rings located at both ends of the rotor core (10) to form a squirrel cage.

9. The rotor structure for the direct-start synchronous reluctance motor according to claim 8, wherein the conductive and non-magnetic material is aluminum or an aluminum alloy.

10. The rotor structure for the direct-start synchronous reluctance motor according to claim 1, filling slots (30) at both ends of a same slit slot (20) are arranged symmetrically with respect to the *q*-axis, and the filling slots (30) at both ends of the same slit slot (20) have a same structure.

11. The rotor structure for the direct-start synchronous reluctance motor according to claim 1, two notches (31) of two filling slots (30) on both sides of a center of the *d*-axis are arranged simultaneously adjacent to the d-axis side or away from the *d*-axis; or one notch (31) is arranged away from the *d*-axis, while the other is arranged adjacent to the *d*-axis.

12. A motor, comprising the rotor structure for the direct-start synchronous reluctance motor of any one of claims 1 to 11.

## Patentansprüche

1. Rotorstruktur für einen Direktstart-Synchronreluktanzmotor, umfassend:
einen Rotorkern (10), wobei der Rotorkern (10) mit einer Mehrzahl von Schlitznuten (20) versehen ist und beide Enden jeder Schlitznut (20) jeweils mit Füllnuten (30) versehen sind, wobei ein Endabschnitt einer Füllnut (30) angrenzend an eine Kante des Rotorkerns (10) eine erste Position angrenzend an eine *d*-Achse des Rotorkerns (10) und eine zweite Position entfernt von der *d*-Achse aufweist und jede Füllnut (30) mit einer Einkerbung (31) an der ersten Position oder der zweiten Position versehen ist;
wobei, in einem gleichen Pol des Rotorkerns (10), wenn eine von zwei angrenzenden Füllnuten (30) mit einer Einkerbung (31) an der ersten Position versehen ist, die andere Füllnut (30) mit einer Einkerbung (31) an der zweiten Position versehen ist;
wobei Außenumfangsenden der Füllnuten (30) an beiden Enden der Schlitznut (20) teilweise geöffnet sind, so dass die Einkerbung (31) so bereitgestellt ist, dass eine halboffene Nutstruktur gebildet wird; und wobei die Füllnuten mit einem leitfähigen, nicht magnetischen Material gefüllt sind.

2. Rotorstruktur für den Direktstart-Synchronreluktanzmotor nach Anspruch 1, wobei eine von zwei Füllnuten (30) auf beiden Seiten der *d*-Achse und angrenzend an die *d*-Achse mit einer Einkerbung (31) an der ersten Position versehen ist und die andere Füllnut (30) mit einer Einkerbung (31) an der zweiten Position versehen ist; oder eine der zwei Füllnuten (30) mit einer Einkerbung (31) an der ersten Position versehen ist und die andere Füllnut (30) mit einer Einkerbung (31) an der ersten Position versehen ist; oder eine der zwei Füllnuten (30) mit einer Einkerbung (31) an der zweiten Position versehen ist und die andere Füllnut (30) mit einer Einkerbung (31) an der zweiten Position versehen ist.

3. Rotorstruktur für den Direktstart-Synchronreluktanzmotor nach Anspruch 1 oder 2, wobei eine Breite der Einkerbung (31) gleich k ist, wobei 0,5σ≤*k*≤4σ, und wobei σ eine Breite eines Luftspalts zwischen einem Statorkern und den Rotorkernen (10) ist.

4. Rotorstruktur für den Direktstart-Synchronreluktanzmotor nach Anspruch 3, wobei 0,1*W*≤*k*≤0,7*W*, und wobei *W* eine Breite des Endabschnitts der Füllnut (30) angrenzend an die Kante des Rotorkerns (10) darstellt.

5. Rotorstruktur für den Direktstart-Synchronreluktanzmotor nach Anspruch 1, wobei eine Seitenwand des Endabschnitts der Füllnut (30) angrenzend an die Kante des Rotorkerns (10) mit einer abgeschrägten Kantenstruktur versehen ist und ein Winkel zwischen der abgeschrägten Kantenstruktur und einer geometrischen Mittellinie der Einkerbung (31) in einer radialen Richtung des Rotorkerns (10) θ ist, wobei 120°≤θ≤160°.

6. Rotorstruktur für den Direktstart-Synchronreluktanzmotor nach Anspruch 1, wobei eine Verstärkungsrippe zwischen der Füllnut (30) und einer angrenzenden Schlitznut (20) bereitgestellt ist, wobei eine Breite der Verstärkungsrippe gleich *L1* ist, wobei 0,8σ≤*L1*≤3σ, und wobei σ eine Breite eines Luftspalts zwischen dem Statorkern und dem Rotorkern (10) ist.

7. Rotorstruktur für den Direktstart-Synchronreluktanzmotor nach Anspruch 1, wobei eine eigenständige Füllnut in einer *q*-Achsen-Richtung des Rotorkerns (10) bereitgestellt ist, wobei die eigenständige Füllnut angrenzend an eine Außenkante des Rotorkerns (10) bereitgestellt ist, wobei die eigenständige Füllnut eine Bogenstruktur aufweist und eine Seite der eigenständigen Füllnut, die einer Wellenöffnung des Rotorkerns (10) zugewandt ist, so angeordnet ist, dass sie hervorsteht.

8. Rotorstruktur für den Direktstart-Synchronreluktanzmotor nach Anspruch 7, wobei die Füllnut (30) und die eigenständige Füllnut mit einem leitfähigen und nicht magnetischen Material gefüllt sind, so dass das leitfähige und nicht magnetische Material mit leitfähigen Endringen kurzgeschlossen ist, die sich an beiden Enden des Rotorkerns (10) befinden, um einen Käfigläufer auszubilden.

9. Rotorstruktur für den Direktstart-Synchronreluktanzmotor nach Anspruch 8, wobei das leitfähige und nicht magnetische Material Aluminium oder eine Aluminiumlegierung ist.

10. Rotorstruktur für den Direktstart-Synchronreluktanzmotor nach Anspruch 1, wobei Füllnuten (30) an beiden Enden einer gleichen Schlitznut (20) in Bezug auf die *q*-Achse symmetrisch angeordnet sind und die Füllnuten (30) an beiden Enden der gleichen Schlitznut (20) eine gleiche Struktur aufweisen.

11. Rotorstruktur für den Direktstart-Synchronreluktanzmotor nach Anspruch 1, wobei zwei Einkerbungen (31) von zwei Füllnuten (30) auf beiden Seiten einer Mitte der *d*-Achse gleichzeitig angrenzend an die d-Achsenseite oder entfernt von der *d*-Achse angeordnet sind; oder wobei eine Einkerbung (31) entfernt von der *d*-Achse angeordnet ist, während die andere angrenzend an die *d*-Achse angeordnet ist.

12. Motor, umfassend die Rotorstruktur für den Direktstart-Synchronreluktanzmotor nach einem der Ansprüche 1 bis 11.

## Revendications

1. Structure de rotor pour un moteur à réluctance synchrone à démarrage direct, comprenant :
un noyau de rotor (10), dans laquelle le noyau de rotor (10) est pourvu d'une pluralité de fentes découpées (20), et les deux extrémités de chaque fente découpée (20) sont respectivement pourvues de fentes de remplissage (30), une partie d'extrémité d'une fente de remplissage (30) adjacente à un bord du noyau de rotor (10) a une première position adjacente à un axe *d* du noyau de rotor (10) et une seconde position éloignée de l'axe *d*, et chaque fente de remplissage (30) est pourvue d'une entaille (31) à la première position ou la seconde position ;
dans laquelle, dans un même pôle du noyau de rotor (10), lorsqu'une de deux fentes de remplissage adjacentes (30) est pourvue d'une entaille (31) à la première position, l'autre fente de remplissage (30) est pourvue d'une entaille (31) à la seconde position ;
dans laquelle des extrémités périphériques extérieures des fentes de remplissage (30) aux deux extrémités de la fente découpée (20) sont partiellement ouvertes, pour que l'entaille (31) soit prévue pour former une structure de fente à moitié ouverte ; et les fentes de remplissage sont remplies avec un matériau conducteur non magnétique.

2. Structure de rotor pour le moteur à réluctance synchrone à démarrage direct selon la revendication 1, dans laquelle une de deux fentes de remplissage (30) sur les deux côtés de l'axe d et adjacente à l'axe d est pourvue d'une entaille (31) à la première position, et l'autre fente de remplissage (30) est pourvue d'une entaille (31) à la seconde position ; ou, une des deux fentes de remplissage (30) est pourvue d'une entaille (31) à la première position, et l'autre fente de remplissage (30) est pourvue d'une entaille (31) à la première position ; ou, une des deux fentes de remplissage (30) est pourvue d'une entaille (31) à la seconde position, et l'autre fente de remplissage (30) est pourvue d'une entaille (31) à la seconde position.

3. Structure de rotor pour le moteur à réluctance synchrone à démarrage direct selon la revendication 1 ou 2, dans laquelle une largeur de l'entaille (31) est égale à *k*, avec 0,5σ ≤ *k* ≤ 4σ, et σ est une largeur d'un entrefer entre un noyau de stator et le noyau de rotor (10).

4. Structure de rotor pour le moteur à réluctance synchrone à démarrage direct selon la revendication 3, dans laquelle, 0,1*W* ≤ *k* ≤ 0,7*W*, et *W* représente une largeur de la partie d'extrémité de la fente de remplissage (30) adjacente au bord du noyau de rotor (10).

5. Structure de rotor pour le moteur à réluctance synchrone à démarrage direct selon la revendication 1, dans laquelle une paroi latérale de la partie d'extrémité de la fente de remplissage (30) adjacente au bord du noyau de rotor (10) est pourvue d'une structure de bord biseautée, et un angle entre la structure de bord biseautée et une ligne centrale géométrique de l'entaille (31) dans une direction radiale du noyau de rotor (10) est θ, avec 120 ° ≤ θ ≤ 160 °.

6. Structure de rotor pour le moteur à réluctance synchrone à démarrage direct selon la revendication 1, dans laquelle une nervure de renfort est prévue entre la fente de remplissage (30) et une fente découpée adjacente (20), une largeur de la nervure de renfort est égale à *L1*, avec 0,80σ ≤ *L1* ≤ 3σ, et σ est une largeur d'un entrefer entre le noyau de stator et le noyau de rotor (10).

7. Structure de rotor pour le moteur à réluctance synchrone à démarrage direct selon la revendication 1, dans laquelle une fente de remplissage indépendante est prévue dans une direction d'axe *q* du noyau de rotor (10), la fente de remplissage indépendante est prévue de façon adjacente à un bord extérieur du noyau de rotor (10), la fente de remplissage indépendante a une structure arquée, et un côté de la fente de remplissage indépendante faisant face à un trou d'arbre du noyau de rotor (10) est agencée pour faire saillie.

8. Structure de rotor pour le moteur à réluctance synchrone à démarrage direct selon la revendication 7, dans laquelle la fente de remplissage (30) et la fente de remplissage indépendante sont remplies avec un matériau conducteur et non magnétique, de telle sorte que le matériau conducteur et non magnétique soit court-circuité avec des bagues d'extrémité conductrices aux deux extrémités du noyau de rotor (10) pour former une cage d'écureuil.

9. Structure de rotor pour le moteur à réluctance synchrone à démarrage direct selon la revendication 8, dans laquelle le matériau conducteur et non magnétique est de l'aluminium ou un alliage d'aluminium.

10. Structure de rotor pour le moteur à réluctance synchrone à démarrage direct selon la revendication 1, des fentes de remplissage (30) aux deux extrémités d'une même fente découpée (20) sont agencées symétriquement par rapport à l'axe *q*, et les fentes de remplissage (30) aux deux extrémités de la même fente découpée (20) ont une même structure.

11. Structure de rotor pour le moteur à réluctance synchrone à démarrage direct selon la revendication 1, deux entailles (31) de deux fentes de remplissage (30) sur les deux côtés d'un centre de l'axe *d* sont agencées de façons simultanément adjacente au côté axe *d* ou éloignée de l'axe *d* ; ou une entaille (31) est agencée de façon éloignée de l'axe *d*, alors que l'autre est agencée de façon adjacente à l'axe *d*.

12. Moteur, comprenant la structure de rotor pour le moteur à réluctance synchrone à démarrage direct de l'une quelconque des revendications 1 à 11.
